# EUROPEAN PATENT SPECIFICATION

(11) **EP 4 491 297 B1**
(45) Date of publication and mention of the grant of the patent: **24.06.2026**
(21) Application number: 23184342.6
(22) Date of filing: 10.07.2023
(51) Int. Cl.: B21J 15/00, B21J 15/36

(54) **PUNCH-RIVETING DIE, PUNCH-RIVETING TOOL AND METHOD FOR PRODUCING A PUNCH-RIVET JOINT**
STANZNIETMATRIZE, STANZNIETWERKZEUG UND VERFAHREN ZUR HERSTELLUNG EINER STANZNIETVERBINDUNG
MATRICE DE RIVETAGE PAR POINCONNAGE, OUTIL DE RIVETAGE PAR POINCONNAGE ET PROCÉDÉ DE FABRICATION D'UNE CONNECTION DE RIVETAGE PAR POINCONNAGE

(43) Date of publication of application: 15.01.2025
(73) Proprietor: Newfrey LLC, New Britain, CT 06053 (US)
(72) Inventor: BARTIG, Paul, 35394 Gießen (DE)
(74) Representative: SBD IPAdmin

(56) References cited:
- EP-A1- 4 035 794
- WO-A1-02/02259
- WO-A1-2007/147551
- WO-A1-2011/023616
- WO-A1-2014/009129
- WO-A1-2017/148684
- WO-A1-2018/194021
- JP-A- 2018 176 237
- JP-A- H03 210 931

## Description

The present application relates to self-piercing riveting (SPR) technologies. More specifically, the present application relates to dies used in during the installation of self-piercing rivets.

Self-pierce riveting (SPR) is a high-speed mechanical fastening process for joining two or more sheets of material without a predrilled or punched hole. Typically, SPR processes are conducted by driving a semi-hollow rivet through an uppermost workpiece layer and upsetting the rivet in a lowermost workpiece layer to form a durable mechanical joint. When driven into the workpiece arrangement, the hollow shank of the rivet widen radially and hereby creates an undercut that results in permanent joining of the workpieces. The end of the shank does not completely pierce the lowermost workpiece and does not protrude from the workpiece arrangement. Rather, a so-called residual base thickness of the material of the lowermost workpiece layer remains between the end of the rivet shank and the underside of the thus produced punch-rivet joint. To realize the SPR process, the lowermost workpiece layer is supported at a die. The die is arranged opposite to a punch adapted to drive the rivet into the workpiece arrangement.

There are different shapes and geometries of die, which can depend on the workpiece materials, rivet material and/or geometry, ... but also the kind of joint to be achieved. The die plays an important role in the formation of a robust joint.

EP2872270A1 from the applicant for instance discloses a die comprising a basic body, which has a recess for forming an underside of a punch-rivet joint, the recess having a base and an annular wall. An annular radial-flow inhibiting device is realized in a central region of the base, which inhibiting device limits a radial material flow out of the inner region of the annular radial-flow inhibiting device. Such dies allow to realize joints which are axially compact and robust.

EP3423211A1 discloses a die comprising the following features: a main body having an upper side and a recess formed therein. The recess comprises an annular demolding section arranged radially outwardly, a subsequent or adjacent annular channel section and a centrally arranged die bottom, wherein in a cross section of the self-piercing riveting die extending parallel to the central axis a demolding inclination of the demolding section encloses with the upper side of the self-piercing riveting die an angle ∝ in the range of 5°≤∝≤45°.

In vehicle construction, with the use of megacasting, there is an increasing need in joining materials of different strength, and notably high strength steel or ultra-high strength steel workpieces with cast aluminium. More generally, there is an increasing need to join brittle materials, like die-casting aluminium, (which are therefore non deformable), without risks of cracks within the rivet, within the brittle material workpiece (notably on the outside and on the shank area of the rivet when the brittle material workpiece is the lowermost workpiece). There is also a need to have a die which avoids the collapse of the rivet during the setting step and which allows a high joining force.

Accordingly, the present invention provides a punch-riveting die according to claim 1. More particularly, the punch-riveting die is for a punch-riveting tool for setting a semi-hollow punch rivet with a rivet shank inner diameter into a punch rivet joint. The punch-riveting die comprises a basic body with a sheet metal support surface and a recess for forming an underside of a punch-rivet joint, the recess is arranged rotationally symmetrically to the central axis of the punch-riveting die, the recess having a first annular base, a second annular base and a central cavity extending axially below the second base of the recess. A projection is realized in the central part of the cavity and a first annular wall extends between the first base and the sheet metal support surface, a second annular wall extends between the first base and the second base, and a third annular wall extends between the second base and the bottom of the cavity.

The projection within the cavity is such that a ring groove is formed. The present geometry with three levels allows the joining between high strength steel or ultra-high strength steel and brittle cast aluminium for instance without the formation of cracks or without altering the performance of the joint. The cavity is such that the rivet compresses as little as possible and can form a sufficient undercut.

In an embodiment, the first annular base is inclined with respect to the plane defined by the sheet metal support surface. This improves the material intake to avoid cracks and increase the die volume.

In an embodiment, the first annular base is curved. Thus, an optimization of the flow behavior of aluminum casting is realized.

In an embodiment, the first annular base comprises a convex flow barrier. The flow barrier positively influences the material behavior and reduces the tensions on the rivet, the die and workpieces.

In an embodiment, the first annular base comprises a first end connected to the first annular wall and a second end opposite the first end and connected to the second annular wall, and wherein the second end is a rounded section, and wherein the second end is above the first end. The rounded section forms the convex flow barrier. The second end is above the first end, which means that the second end is in the axial direction closer from the sheet metal support surface than the first end. In other words, the second annular base is inclined such that its end in the vicinity of the cavity is axially above the first end. The second annular base forms a ramp.

In an embodiment, the first annular wall is realized in the manner of a truncated-cone surface. In an embodiment, the second annular wall is realized in the manner of a truncated-cone surface. In an embodiment, the third annular wall is realized in the manner of a truncated cone-surface.

In an embodiment, the first annular wall has a first tapered angle, the second annular wall has a second tapered angle, the second tapered angle being smaller than the first tapered angle. The first and second annular walls with the tapered angle allows a better demolding.

In an embodiment, the bottom of the cavity comprises a concave flow barrier. The flow barrier positively influences the material behavior and reduces the tensions on the rivet, the die and workpieces.

The present invention is also directed to a punch-riveting tool for setting a semi-hollow punch rivet into a punch rivet joint, the punch-riveting tool comprising:
- a frame;
- a punch-riveting head movable in a punching direction and including a punch-riveting punch operable for mounting the punch rivet to be set into the punch rivet joint; and
- a punch-riveting die as described above.
The punch-riveting tool is adapted to perform self-piercing riveting joints a with workpiece made of brittle material without decreasing the joint properties.

The present invention is also directed to a method for producing a punch-rivet joint of at least two workpieces, which are disposed on the top side of a punch-riveting die as described above, comprising the step of driving a semi-hollow punch rivet into the uppermost workpiece, a hollow shank of the semi-hollow punch rivet also penetrating into the lowermost workpiece and widening radially therein, an underside of the punch-rivet joint being formed by the punch-riveting die. In an embodiment, the uppermost workpiece is made of a high strength steel or ultra-high strength steel, and wherein the lowermost workpiece is made of brittle cast aluminum. The geometry of the die limits or avoids the creation of cracks within the rivet or the workpieces during the setting.

In an embodiment, the uppermost workpiece has a first thickness Tw, wherein the recess has an axial depth TA between the sheet metal support surface and the second base, and wherein the axial depth TA is in the range Tw<TA<1,5Tw, and in particular is in the range Tw<TA<1,35Tw. Thus, the undercut remains axially compact.

In an embodiment, the rivet has a rivet shank diameter Dr and the second annular wall has a second recess diameter DA2, and wherein the second recess diameter DA2 is in the range 0,8Dr<DA2<1,2Dr. This contributes to the compactness of the undercut and the limitation of cracks and stress within the materials of the rivet and the workpieces.

It is understood that the above-mentioned features and those yet to be explained in the following can be applied, not only in the respectively specified combination, but also in other combinations or singly, without departure from the scope of the present invention.

Other characteristics and advantages of the invention will readily appear from the following description of embodiments, provided as non-limitative examples, in reference to the accompanying drawings.

In the drawings:
Fig. 1 shows a schematic representation of a punch-riveting tool according to the invention, with a punch-riveting die according to the invention;
Fig. 2 shows a perspective view of the punch-riveting die of Fig. 1;

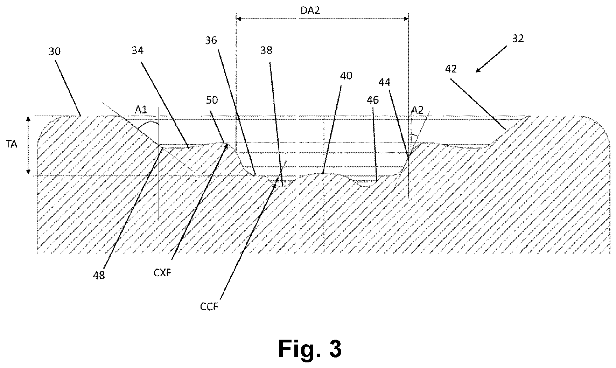

Fig. 3 shows a cross-sectional view of the upper part of the basic body of the punch-riveting die of Fig. 2.

On the different figures, the same reference signs designate identical or similar elements.

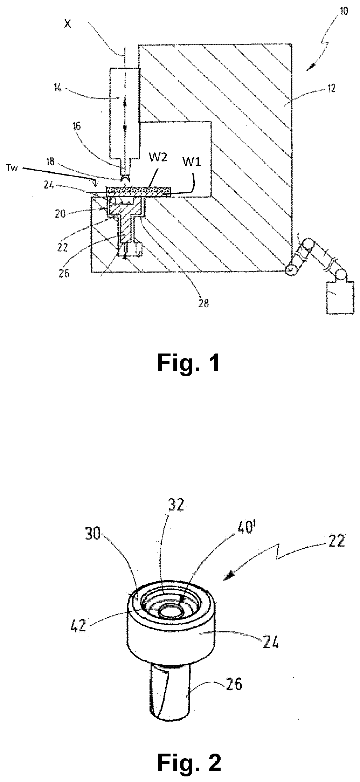

Fig. 1 schematically shows a punch-riveting tool 10. The punch-riveting tool 10 comprises a frame 12, also called C-frame. At one end of the frame 12, in a known manner a carriage 14 is mounted so as to be displaceable along a longitudinal axis X (punching axis). A punch 16, for performing a punch-riveting process, is disposed on the carriage 14. A punch rivet 18 is held by means of a holding device.

The frame 12 further comprises at a second end, opposite the first end, a punch-riveting die receiver 20 for receiving a punch-riveting die 22.

The punch-riveting die 22 has a basic body 24 and has a die shank 26, of a lesser diameter, extending axially therefrom. The die shank 26 is adapted to be receive in an opening of the die receiver 20. A radial surface at the transition between the basic body 24 and the shank 26 bears on a shoulder 28 of the die receiver 20. The basic body 24 is preferably rotationally symmetrical in form.

The punch-riveting die 22, and more particularly the basic body 24, comprises a sheet metal support surface 30 which forms a first axial side. The sheet metal support surface 30, when the die 22 is mounted within the die receiver 20, is adapted to face towards the punch 16. The sheet metal support surface 30 is adapted to support workpiece layers destined to be joined.

In a punch-riveting process, usually, two or more workpieces W1, W2 in the form of sheets are disposed between the punch 16 and the die 22, and more particularly are supported by the sheet metal support surface 30 of the die 22. Further, it is possible to fix the workpiece stack in position with regard to the sheet metal support surface 30. The punch 16 is then moved downwards along the longitudinal axis X, such that the rivet 18 can be driven into the workpiece arrangement. A hollow shank of the punch rivet 18 in this case deforms radially within the workpieces and is deflected radially outwards, as a result of which a non-positive and/or positive joint is produced between the workpieces.

The sheet metal support surface 30 comprises a recess 32 (see Fig. 2). The recess 32 is arranged rotationally symmetrically to the central axis of the punch-riveting die. The recess has a first annular base 34, a second annular base 36 and a central cavity 38 extending axially below the second annular base 36. The central cavity 38 is provided with a projection 40. The projection 40 is arranged in the central part of the central cavity 38. Thus, the central cavity 38 with the projection defines a ring groove.

The first annular base 34 extends axially below the sheet metal support surface 30. The second annular base 36 extends axially below the first annular base 34. In other words, the first annular base extends axially between the sheet metal support surface 30 and the second annular base.

A first annular wall 42 extends between the sheet metal support surface 30 and the first annular base 34. The first annular wall connects the sheet metal support surface 30 and the first annular base. The first annular wall is realized in the manner of a truncated-cone surface.

A second annular wall 44 extends between the first annular base 32 and the second annular base 36. The second annular wall connects the first annular base and the second annular base. The second annular wall is realized in the manner of a truncated-cone surface.

The first annular wall 42 has a first tapered angle A1. For instance, the first tapered angle A1 may be between 35 and 80 degrees. The second annular wall 44 has a second tapered angle A2. The second tapered angle A2 may be between 5 and 45 degrees. The second tapered angle is smaller than the first tapered angle.

A third annular wall 46 extends between the second annular base and the recess. The third annular wall connects the second annular base and the recess. The third annular wall is realized in the manner of a truncated-cone surface. The third annular wall may have a tapered angle substantially similar to the second tapered angle A2.

The sheet metal support surface 30 extends along a plane which is sensibly horizontal. The first annular base 34 is inclined with respect to the plane defined by the sheet metal support surface 30. The first annular base 32 may also be slightly curved.

The first annular base 32 comprises a convex flow barrier CXF. The convex flow barrier prevents the brittle material from cracking at the shank of the rivet. The first annular wall 42 comprises a first end 48 and a second end 50. The first end 48 contacts the first annular wall. The second end 50 contacts the second annular wall. The second end is a rounded section. The second end 50 extends axially above the first end 48. The first annular base 34 forms a ramp which extends from the first end to the second end, wherein the second end is closer from the sheet metal support surface than the first end. The ramp and/or the rounded section may form the convex flow barrier CXF.

The second annular base 34 comprises a first end contacting the second annular wall and a second end contacting the third annular wall. The first end and the second end are for instance are essentially on the same plane or level, such that the axial distance between the first end and the sheet metal support surface and the axial distance between the second end and the sheet metal support surface are identical or substantially identical. The second end may also have a rounded portion. For instance the second annular base 36 extends in a plane sensibly parallel to the plane of the sheet metal support surface 30.

The bottom of the cavity 38 comprises for instance a concave flow barrier CCF. The concave flow barrier CCF reduces the stress in the die and provides additional volume for the deformed material. The concave flow barrier is for instance formed by the ring groove.

The projection 40 may extend axially at the same height than the second annular base or may be axially slightly above the second annular base. The projection is for instance a rounded projection.

As mentioned above, for producing a punch-rivet joint of at least two workpieces, the workpieces are first stacked and arranged on the sheet metal support surface 30 of the die. A semi-hollow punch rivet is driven with the punch into the uppermost workpiece. A hollow shank of the semi-hollow punch rivet penetrates into the lowermost workpiece and widens radially therein. The underside of the punch-rivet joint is then formed by the punch-riveting die. In a particular embodiment, the uppermost workpiece is made of a high strength steel or ultra-high strength steel and the lowermost workpiece is made of brittle cast aluminum. More generally, at least one of the workpiece is made of a brittle material like cast aluminum.

The uppermost workpiece W2 has a first thickness Tw. The recess 32 has an axial depth TA between the sheet metal support surface 30 and the second annular base. In an embodiment, the axial depth TA is in the range Tw<TA<1,5Tw, and in particular is in the range Tw<TA<1,35Tw.

The rivet has a rivet shank diameter Dr and the second annular wall has a second recess diameter DA2. The second recess diameter DA2 is in the range 0,8Dr<DA2<1,2Dr.

## Claims

1. Punch-riveting die (22) for a punch-riveting tool for setting a semi-hollow punch rivet with a rivet shank inner diameter into a punch rivet joint, the punch-riveting die (22) comprising a basic body (24) with a sheet metal support surface (30) and a recess (32) for forming an underside of a punch-rivet joint,
the recess being arranged rotationally symmetrically to the central axis of the punch-riveting die (22), the recess (32) having a first annular base (34), a second annular base (36) and a central cavity (38) extending axially below the second base of the recess, wherein a projection (40) is realized in the central part of the cavity (38), and wherein a first annular wall (42) extends between the first base and the sheet metal support surface (30), a second annular wall (44) extends between the first base and the second base, and a third annular wall (46) extends between the second base and the bottom of the cavity (38).

2. Punch-riveting die (22) according to claim 1, wherein the first annular base (34) is inclined with respect to the plane defined by the sheet metal support surface.

3. Punch-riveting die (22) according to claim 1 or claim 2, wherein the first annular (34) base is curved.

4. Punch-riveting die (22) according to any of claims 1 to 3, wherein the first annular (34) base comprises a convex flow barrier (CXF).

5. Punch-riveting die (22) according to any of claims 1 to 4, wherein the first annular base (34) comprises a first end (48) connected to the first annular wall and a second end (50) opposite the first end and connected to the second annular wall, and wherein the second end is a rounded section, and wherein the second end is axially above the first end.

6. Punch-riveting die (22) according to any of claims 1 to 5, wherein the first annular wall (42) is realized in the manner of a truncated-cone surface.

7. Punch-riveting die (22) according to any of claims 1 to 6, wherein the second annular wall (44) is realized in the manner of a truncated-cone surface.

8. Punch-riveting die (22) according to any of claims 1 to 7, wherein the third annular wall (46) is realized in the manner of a truncated cone-surface.

9. Punch-riveting die (22) according to any of claims 1 to 8, wherein the first annular wall (42) has a first tapered angle, the second annular wall (44) has a second tapered angle, the second tapered angle being smaller than the first tapered angle.

10. Punch-riveting die (22) according to any of claims 1 to 9, wherein the bottom of the cavity (38) comprises a concave flow barrier (CCF).

11. Punch-riveting tool (10) for setting a semi-hollow punch rivet into a punch rivet joint, the punch-riveting tool comprising:
- a frame;
- a punch-riveting head movable in a punching direction and including a punch-riveting punch operable for mounting the punch rivet to be set into the punch rivet joint; and
- a punch-riveting die (22) according to any of the preceding claims.

12. Method for producing a punch-rivet joint of at least two workpieces (W1, W2), which are disposed on the top side of a punch-riveting die (22) according to any one of Claims 1 to 10, comprising the step of driving a semi-hollow punch rivet into the uppermost workpiece, a hollow shank of the semi-hollow punch rivet also penetrating into the lowermost workpiece and widening radially therein, an underside of the punch-rivet joint being formed by the punch-riveting die.

13. Method according to claim 12, wherein the uppermost workpiece (W2) is made of a high strength steel or ultra-high strength steel, and wherein the lowermost (W1) workpiece is made of brittle cast aluminum.

14. Method according to claim 12 or 13, wherein the uppermost workpiece has a first thickness Tw, wherein the recess has an axial depth TA between the sheet metal support surface and the second base, and wherein the axial depth TA is in the range Tw<TA<1,5Tw.

15. Method according to any of claims 12 to 14, wherein the rivet has a rivet shank diameter Dr and the second annular wall (44) has a second recess diameter DA2, and wherein the second recess diameter DA2 is in the range 0,8Dr<DA2<1,2Dr.

## Patentansprüche

1. Stanznietmatrize (22) für ein Stanznietwerkzeug zum Setzen eines halbhohlen Stanzniets mit einem Nietschaft-Innendurchmesser in eine Stanznietverbindung, wobei die Stanznietmatrize (22) einen Grundkörper (24) mit einer Blechstützoberfläche (30) und einer Aussparung (32) zur Bildung einer Unterseite einer Stanznietverbindung umfasst,
die Aussparung drehsymmetrisch zur Mittelachse der Stanznietmatrize (22) angeordnet ist, die Aussparung (32) eine erste ringförmige Basis (34), eine zweite ringförmige Basis (36) und einen zentralen Hohlraum (38) aufweist, der sich axial unterhalb der zweiten Basis der Aussparung erstreckt, wobei im zentralen Teil des Hohlraums (38) ein Vorsprung (40) gebildet ist, und wobei sich zwischen der ersten Basis und der Blechstützoberfläche (30) eine erste ringförmige Wand (42) erstreckt, sich zwischen der ersten Basis und der zweiten Basis eine zweite ringförmige Wand (44) erstreckt, und sich zwischen der zweiten Basis und dem Boden des Hohlraums (38) eine dritte ringförmige Wand (46) erstreckt.

2. Stanznietmatrize (22) nach Anspruch 1, wobei die erste ringförmige Basis (34) in Bezug auf die durch die Blechstützoberfläche definierten Ebene geneigt ist.

3. Stanznietmatrize (22) nach Anspruch 1 oder Anspruch 2, wobei die erste ringförmige (34) Basis gekrümmt ist.

4. Stanznietmatrize (22) nach einem der Ansprüche 1 bis 3, wobei die erste ringförmige (34) Basis eine konvexe Strömungsbarriere (CXF) umfasst.

5. Stanznietmatrize (22) nach einem der Ansprüche 1 bis 4, wobei die erste ringförmige Basis (34) ein erstes Ende (48), das mit der ersten ringförmigen Wand verbunden ist, und ein zweites Ende (50) umfasst, das dem ersten Ende gegenüberliegt und mit der zweiten ringförmigen Wand verbunden ist, wobei das zweite Ende ein abgerundeter Abschnitt ist und wobei das zweite Ende axial über dem ersten Ende liegt.

6. Stanznietmatrize (22) nach einem der Ansprüche 1 bis 5, wobei die erste ringförmige Wand (42) als Kegelstumpfoberfläche realisiert ist.

7. Stanznietmatrize (22) nach einem der Ansprüche 1 bis 6, wobei die zweite ringförmige Wand (44) als Kegelstumpfoberfläche realisiert ist.

8. Stanznietmatrize (22) nach einem der Ansprüche 1 bis 7, wobei die dritte ringförmige Wand (46) als Kegelstumpfoberfläche realisiert ist.

9. Stanznietmatrize (22) nach einem der Ansprüche 1 bis 8, wobei die erste ringförmige Wand (42) einen ersten Konuswinkel aufweist, die zweite ringförmige Wand (44) einen zweiten Konuswinkel aufweist, wobei der zweite Konuswinkel kleiner als der erste Konuswinkel ist.

10. Stanznietmatrize (22) nach einem der Ansprüche 1 bis 9, wobei der Boden des Hohlraums (38) eine konkave Strömungsbarriere (CCF) umfasst.

11. Stanznietwerkzeug (10) zum Setzen eines halbhohlen Stanzniets in eine Stanznietverbindung, wobei das Stanznietwerkzeug umfasst:
- einen Rahmen;
- einen Stanznietkopf, der in Stanzrichtung beweglich ist, und einen Stanznietstempel beinhaltet, der zum Montieren des in die Stanznietverbindung zu setzenden Stanzniets betreibbar ist; und
- eine Stanznietmatrize (22) nach einem der vorstehenden Ansprüche.

12. Verfahren zur Herstellung einer Stanznietverbindung von mindestens zwei Werkstücken (W1, W2), die auf der Oberseite einer Stanznietmatrize (22) nach einem der Ansprüche 1 bis 10 angeordnet sind, umfassend den Schritt zum Eintreiben eines halbhohlen Stanzniets in das oberste Werkstück, wobei ein hohler Schaft des halbhohlen Stanzniets auch in das unterste Werkstück eindringt und sich darin radial erweitert, wobei eine Unterseite der Stanznietverbindung durch die Stanznietmatrize gebildet wird.

13. Verfahren nach Anspruch 12, wobei das oberste Werkstück (W2) aus einem hochfesten Stahl oder ultrahochfesten Stahl gefertigt ist, und wobei das unterste Werkstück (W1) aus sprödem Aluminiumguss gefertigt ist.

14. Verfahren nach Anspruch 12 oder 13, wobei das oberste Werkstück eine erste Dicke Tw aufweist, wobei die Aussparung eine axiale Tiefe TA zwischen der Blechstützoberfläche und der zweiten Basis aufweist und wobei die axiale Tiefe TA im Bereich Tw<TA< 1,5Tw liegt.

15. Verfahren nach einem der Ansprüche 12 bis 14, wobei der Niet einen Nietschaftdurchmesser Dr aufweist und die zweite ringförmige Wand (44) einen zweiten Aussparungsdurchmesser DA2 aufweist, und wobei der zweite Aussparungsdurchmesser DA2 im Bereich 0,8Dr<DA2<1,2Dr liegt.

## Revendications

1. Matrice de rivetage par poinçonnage (22) pour un outil de rivetage par poinçonnage destiné à insérer un rivet poinçon semi-creux avec un diamètre intérieur de tige de rivet dans un assemblage riveté, la matrice de rivetage par poinçonnage (22) comprenant un corps de base (24) avec une surface de support en tôle (30) et un évidement (32) pour former une face inférieure d'un joint riveté par poinçonnage,
l'évidement étant agencé de manière symétrique en rotation par rapport à l'axe central de la matrice de rivetage par poinçonnage (22), l'évidement (32) présentant une première base annulaire (34), une seconde base annulaire (36) et une cavité centrale (38) s'étendant axialement sous la seconde base de l'évidement, dans laquelle une saillie (40) est réalisée dans la partie centrale de la cavité (38), et dans laquelle une première paroi annulaire (42) s'étend entre la première base et la surface de support en tôle (30), une deuxième paroi annulaire (44) s'étend entre la première base et la seconde base, et une troisième paroi annulaire (46) s'étend entre la seconde base et le fond de la cavité (38).

2. Matrice de rivetage par poinçonnage (22) selon la revendication 1, dans laquelle la première base annulaire (34) est inclinée par rapport au plan défini par la surface de support en tôle.

3. Matrice de rivetage par poinçonnage (22) selon la revendication 1 ou la revendication 2, dans laquelle la première base annulaire (34) est incurvée.

4. Matrice de rivetage par poinçonnage (22) selon l'une quelconque des revendications 1 à 3, dans laquelle la première base annulaire (34) comprend une barrière d'écoulement convexe (CXF).

5. Matrice de rivetage par poinçonnage (22) selon l'une quelconque des revendications 1 à 4, dans laquelle la première base annulaire (34) comprend une première extrémité (48) reliée à la première paroi annulaire et une seconde extrémité (50) opposée à la première extrémité et reliée à la deuxième paroi annulaire, et dans laquelle la seconde extrémité est une section arrondie, et dans laquelle la seconde extrémité est axialement au-dessus de la première extrémité.

6. Matrice de rivetage par poinçonnage (22) selon l'une quelconque des revendications 1 à 5, dans laquelle la première paroi annulaire (42) est réalisée à la manière d'une surface tronconique.

7. Matrice de rivetage par poinçonnage (22) selon l'une quelconque des revendications 1 à 6, dans laquelle la deuxième paroi annulaire (44) est réalisée à la manière d'une surface tronconique.

8. Matrice de rivetage par poinçonnage (22) selon l'une quelconque des revendications 1 à 7, dans laquelle la troisième paroi annulaire (46) est réalisée à la manière d'une surface tronconique.

9. Matrice de rivetage par poinçonnage (22) selon l'une quelconque des revendications 1 à 8, dans laquelle la première paroi annulaire (42) présente un premier angle conique, la deuxième paroi annulaire (44) présente un second angle conique, le second angle conique étant plus petit que le premier angle conique.

10. Matrice de rivetage par poinçonnage (22) selon l'une quelconque des revendications 1 à 9, dans laquelle le fond de la cavité (38) comprend une barrière d'écoulement concave (CCF).

11. Outil de rivetage par poinçonnage (10) destiné à insérer un rivet poinçon semi-creux dans un assemblage riveté, l'outil de rivetage par poinçonnage comprenant :
- un cadre ;
- une tête de rivetage par poinçonnage mobile dans une direction de poinçonnage et incluant un poinçon de rivetage permettant de monter le rivet poinçon à insérer dans l'assemblage riveté ; et
- une matrice de rivetage par poinçonnage (22) selon l'une quelconque des revendications précédentes.

12. Procédé de production d'un assemblage riveté d'au moins deux pièces (W1, W2), qui sont disposées sur la face supérieure d'une matrice de rivetage par poinçonnage (22) selon l'une quelconque des revendications 1 à 10, comprenant l'étape d'enfoncement d'un rivet poinçon semi-creux dans la pièce supérieure, une tige creuse du rivet poinçon semi-creux pénétrant également dans la pièce inférieure et s'élargissant radialement à l'intérieur de celle-ci, une face inférieure de l'assemblage riveté étant formée par la matrice de rivetage par poinçonnage.

13. Procédé selon la revendication 12, dans lequel la pièce supérieure (W2) est en acier à haute résistance ou en acier à ultra-haute résistance, et dans lequel la pièce inférieure (W1) est en fonte d'aluminium fragile.

14. Procédé selon la revendication 12 ou 13, dans lequel la pièce supérieure présente une première épaisseur Tw, dans lequel l'évidement présente une profondeur axiale TA entre la surface de support en tôle et la seconde base, et dans lequel la profondeur axiale TA est dans la plage Tw<TA<1,5Tw.

15. Procédé selon l'une quelconque des revendications 12 à 14, dans lequel le rivet présente un diamètre de tige de rivet Dr et la deuxième paroi annulaire (44) présente un second diamètre d'évidement DA2, et dans lequel le second diamètre d'évidement DA2 est compris dans la plage 0,8Dr<DA2<1,2Dr.
